Europäisches Patentamt

European Patent Office

Office européen des brevets

(19)

(11) EP 0 571 275 B1

(12) FASCICULE DE BREVET EUROPEEN

(45) Date de publication et mention
de la délivrance du brevet:
**03.07.1996 Bulletin 1996/27**

(51) Int Cl.6: **F16H 61/14**, F16H 61/06

(21) Numéro de dépôt: **93401279.0**

(22) Date de dépôt: **18.05.1993**

(54) **Dispositif de contrôle de transmission automatique à rapports étagés**

Steuervorrichtung für ein automatisches Stufengetriebe

Control device for an automatic multi-stage gearbox

(84) Etats contractants désignés:
**DE ES GB IT**

(30) Priorité: **19.05.1992 FR 9206035**

(43) Date de publication de la demande:
**24.11.1993 Bulletin 1993/47**

(73) Titulaire: **REGIE NATIONALE DES USINES RENAULT S.A.**
**F-92109 Boulogne Billancourt (FR)**

(72) Inventeurs:
• **Berthe, Jean-Paul**
**F-78500 Sartrouville (FR)**
• **Honore, Benoît**
**F-92500 Rueil Malmaison (FR)**
• **Leorat, François**
**F-78000 Versailles (FR)**

(56) Documents cités:
**EP-A- 0 120 779**      **EP-A- 0 410 223**
**FR-A- 2 483 649**      **FR-A- 2 570 458**
**US-A- 4 724 939**      **US-A- 4 805 750**
**US-A- 5 033 328**

## Description

La présente invention se rapporte au domaine technique des transmissions automatiques à rapports étagés comportant un convertisseur hydraulique de couple pontable sur certains rapports.

Il est devenu courant d'équiper les transmissions automatiques d'un système de pontage - ou lock-up - dans le convertisseur, de manière à solidariser, dans certaines conditions de charge et de vitesse du moteur, la turbine et l'impulseur, ce qui permet d'éliminer le glissement important du convertisseur et d'améliorer ainsi le rendement de la transmission dans les conditions en question. La commande du pontage s'effectue le plus souvent en tout ou rien, ce qui implique que, pendant les phases où le lock-up est fermé, un amortisseur soit prévu pour minimiser au mieux l'effet des acyclismes du moteur tout au long de la chaîne cinématique.

La publication EP-A-179 683 de la demanderesse décrit à ce sujet un dispositif de commande de transmission automatique étagée à quatre rapports principaux de marche avant et un rapport de marche arrière, équipée d'un convertisseur hydrocinétique de couple muni d'un amortisseur de vibrations de torsion destiné à filtrer les irrégularités du couple moteur sur les rapports pour lesquels le convertisseur n'intervient pas dans la transmission du couple moteur.

Dans le but d'éliminer l'amortisseur de torsion, difficile à loger dans la coquille du convertisseur et, partant d'une efficacité souvent limitée et insuffisante, il a été proposé (EP-A-410 223) de faire glisser, de manière contrôlée et très limitée, l'embrayage de pontage de façon à lui faire jouer un rôle de limiteur de couple instantané, ce qui lui confère alors une capacité de filtrage des vibrations de torsion engendrées par les acyclismes du moteur. Néanmoins, cette idée, parfaitement correcte dans son principe, se heurte à des difficultés de mise en oeuvre pratique importantes, car il est extrêmement difficile, voire impossible, de trouver dans l'encombrement très contraint d'un convertisseur la place nécessaire pour mettre en place un embrayage disposant d'une surface de friction adéquate et suffisamment peu chargée en pression pour garantir un fonctionnement sans défaut pendant toute la durée de la vie du véhicule. De plus, les déformations importantes que subit un convertisseur pendant son fonctionnement compliquent encore le problème, car il importe alors de trouver des montages permettant de désolidariser les surfaces de friction des éléments proprement dits du convertisseur de façon à garantir, en toutes circonstances, une planéité ou une conjugaison parfaite des surfaces de friction en contact qui, seules, permettent d'espérer une longévité suffisante.

Dans ces conditions, la conception d'un convertisseur à pontage à glissement contrôlé constitue une tâche ardue, toutes les fois que la place disponible axialement pour le convertisseur est limitée, ce qui est le cas dans la plupart des architectures transversales, pour les véhicules à traction.

L'invention a pour but de réaliser un dispositif de contrôle de transmission automatique à rapports étagés permettant de bénéficier des avantages, en matière de filtrage, procurés par un dispositif limiteur de coupe instantané à glissement contrôlé, sans tomber dans les difficultés constructives le plus souvent insurmontables rencontrées dans la conception des convertisseurs à lock-up intégré glissant.

L'invention concerne un dispositif de contrôle de transmission automatique à rapports étagés comportant un convertisseur de couple muni de moyens de pontage, un train d'engrenages épicycloïdal, plusieurs récepteurs hydrauliques assurant la commutation du train épicycloïdal, et un distributeur hydraulique délivrant une pression de ligne PL, qui permet d'alimenter sélectivement les récepteurs sous le contrôle d'un calculateur électronique, selon des informations concernant la marche du véhicule équipé de la transmission. Ce dispositif est caractérisé en ce qu'au moins un élément de commutation est dimensionné de façon à pouvoir glisser de manière contrôlée, notamment lorsque le convertisseur est ponté, en réponse à une diminution momentanée de la pression de ligne, et en ce que ce glissement est asservi, par l'intermédiaire de la pression de ligne PL, à des valeurs de consigne dépendant du couple Cm et de la vitesse du moteur ωm.

Selon un mode de réalisation de l'invention, les moyens de pontage intégrés au convertisseur sont commandés en tout ou rien par le calculateur de la transmission.

Selon un mode de réalisation de l'invention, le convertisseur est muni d'un amortisseur de torsion intégré.

Selon un mode de réalisation de l'invention, le dispositif comporte un système d'asservissement de pression qui délivre en temps réel un signal de commande TON à une électrovanne modulante destinée à abaisser momentanément la pression de ligne pour autoriser le glissement de l'élément de commutation.

Selon un mode de réalisation de l'invention, la régulation de la pression de ligne PL est pilotée par le calculateur électronique de la transmission qui reçoit des informations relatives au couple moteur Cm, à la vitesse du moteur ωm et à la vitesse turbine ωt.

Selon un mode de réalisation de l'invention, la boucle d'asservissement de glissement permet de comparer la valeur instantanée du glissement $\delta\omega = \omega m - \omega t$, à une valeur de consigne de glissement $\delta\omega^c$ (Cm, ωm) fonction des paramètres principaux Cm et ωm, et éventuellement de paramètres secondaires, tels que le rapport engagé (N) ou la température de l'huile ($\theta h$).

Selon un mode de réalisation de l'invention, un régulateur permet de calculer la diminution de pression $\Delta P_L^C$ imposée à la pression de ligne de consigne $P_L^C$ déterminée par le calculateur de la transmission de façon à établir la consigne de pression de ligne pendant le glissement $P_L^C$ (gl) $P_L^C - \Delta P_L^C$.

Selon un mode de réalisation de l'invention, une unité de comparaison assure le calcul de la différence entre la pression de consigne $P_L^C$ (gl) et la pression d'accostage Po de l'organe de commutation, cette différence étant transmise à une unité de traitement qui effectue son produit par la valeur instantanée du glissement $\delta\omega$.

Selon un mode de réalisation, une unité d'intégration est susceptible de démarrer le calcul de l'énergie :

$$Egl = \int_{t_\bullet}^{t} \delta\omega[P^C (gl) - Po] \, dt,$$

proportionnelle à l'énergie dissipée dans l'organe de commutation à partir du début to de la phase de glissement, chaque fois que $\delta\omega$ adopte une valeur non nulle.

Selon un mode de réalisation de l'invention, le dépassement par Egl d'un seuil préétabli permet de déterminer que l'énergie dissipée dans l'organe de commutation pendant une phase de glissement, a atteint un niveau mettant en péril l'endurance et la longévité des garnitures de friction de celui-ci.

Selon un mode de réalisation de l'invention, le dispositif comporte une vanne principale de régulation de pression, équilibrée d'un côté par un premier ressort et de l'autre par la pression de ligne PL agissant en contre réaction sur un poussoir et par la pression de commande modulée Pm contrôlée par l'électrovanne modulante, agissant, dans le même sens que la pression de ligne PL, sur la surface différentielle existant entre la vanne de régulation principale et le poussoir.

Selon un mode de réalisation de l'invention, le dispositif comporte une vanne de réduction de pression, délivrant une pression d'alimentation $P_1$, équilibrée d'un côté par un second ressort, et de l'autre côté par la pression d'alimentation $P_1$ elle-même, ramenée en contre réaction au travers d'un premier gicleur, pour assurer sa propre régulation, la pression $P_1$ assurant, par l'intermédiaire d'un second gicleur, l'alimentation de l'électrovanne modulante.

Selon un mode de réalisation de l'invention, les organes de commutation comportent au moins deux embrayages ($E_1$, $E_2$) et trois moyens d'immobilisation ($F_1$, $F_2$, $F_3$) et l'organe de commutation sollicité par le glissement est un embrayage $E_2$ serré au moins sur les trois rapports supérieurs de la transmission.

L'invention sera mieux comprise à la lumière de la description d'un mode de réalisation particulière de celle-ci, en liaison avec les dessins annexés sur lesquels :

- la figure 1 est un schéma cinématique d'une transmission automatique à double train épicycloïdal connue en soi permettant d'obtenir quatre rapports de marche avant et un rapport de marche arrière,

- la figure 2 présente le tableau de commutation des récepteurs hydrauliques de cette transmission,

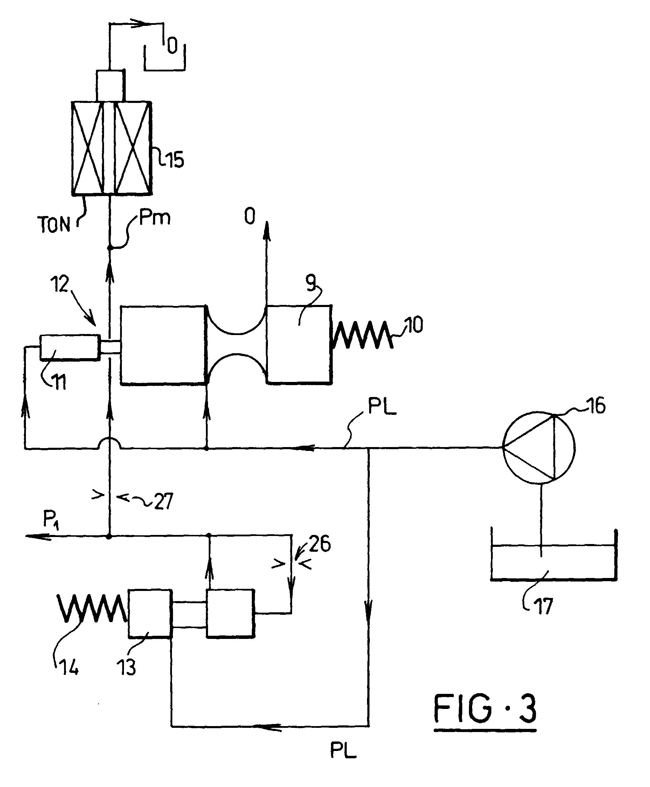

- la figure 3 illustre le système de régulation électro-hydraulique mis en oeuvre dans l'état de la technique mentionné plus haut, et

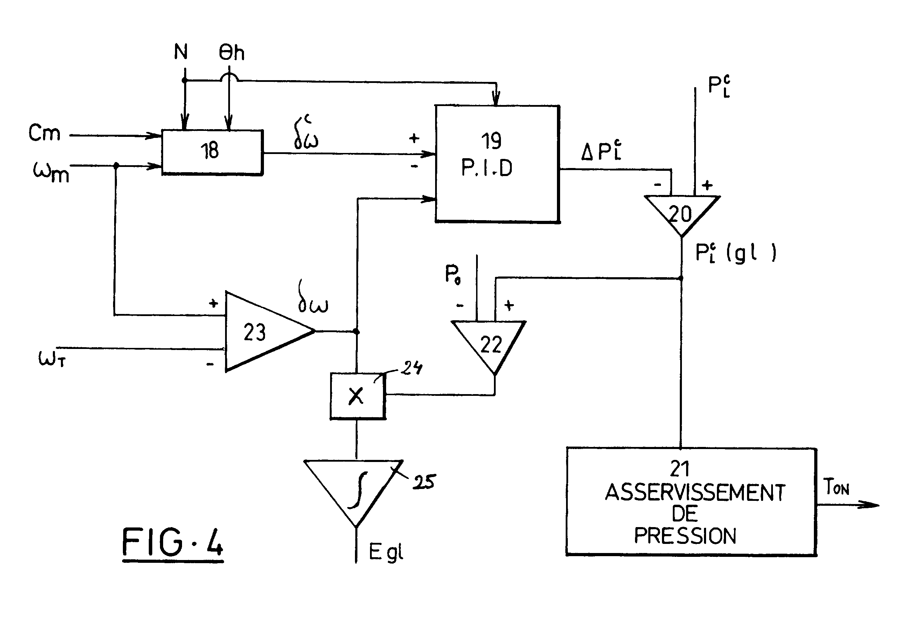

- la figure 4 présente sous forme de tableau synoptique le système d'asservissement faisant l'objet de l'invention.

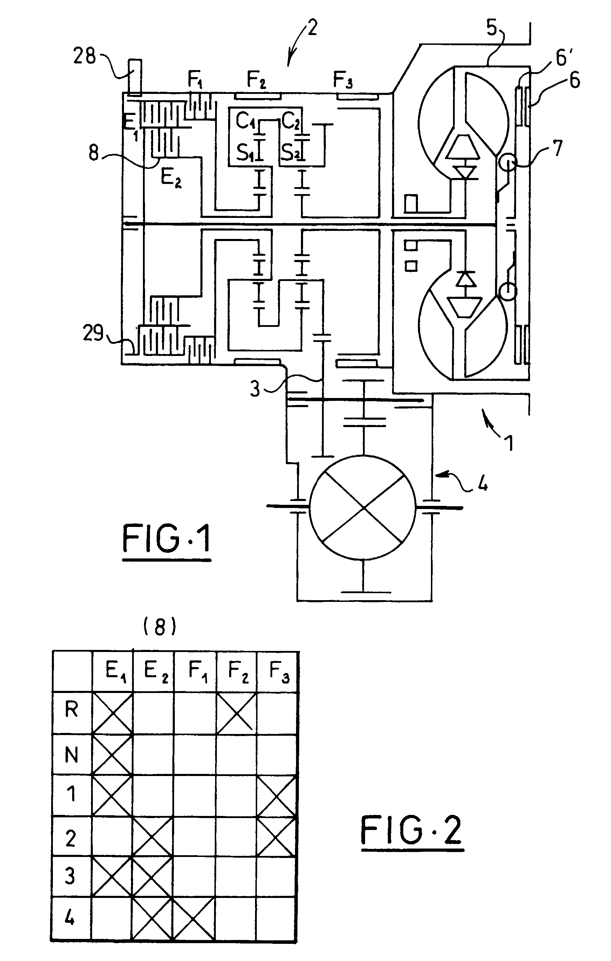

Le dispositif de transmission automatique illustré par la figure 1 présente de façon classique un convertisseur hydraulique de couple 1, associé à un train épicycloïdal 2 dont la couronne de sortie de mouvement 3 est reliée à un différentiel 4.

A l'intérieur de l'enceinte 5 du convertisseur, on a fait apparaître un amortisseur de torsion intégré 7 et les garnitures de friction 6, 6' permettant, de façon usuelle d'assurer le pontage du convertisseur 1. Le train épicycloïdal 2 est un train planétaire double, dont on peut reconnaître notamment les deux couronnes $C_1$, $C_2$ et des satellites $S_1$, $S_2$, appartenant respectivement au premier et au second jeu de satellites. Le train épicycloïdal 2 supporte un capteur 28 de la vitesse de la turbine $\omega t$, visant une cible 29. Les organes de commutation responsables du passage des rapports sont constitués de deux embrayages $E_1$, $E_2$, et de trois moyens d'immobilisation $F_1$, $F_2$, $F_3$, dont le tableau de commutation fait l'objet de la figure 2. Sur ce tableau, on remarque que le second embrayage $E_2$, 8, est serré sur les trois rapports de marche avant les plus élevés. Cette particularité du second embrayage $E_2$, 8, est mise à profit dans le mode de réalisation décrit, mais ne limite en aucun cas l'application de l'invention à une architecture particulière.

En effet, l'invention consiste, en premier lieu, à dimensionner un ou plusieurs éléments de commutation d'une transmission automatique de manière telle que, pour tous les rapports sur lesquels on désire bénéficier d'un effet de limiteur de couple, l'un seulement des éléments de commutation puisse être amené à glisser légèrement lorsque l'on baisse de manière contrôlée la pression de ligne PL : un asservissement du glissement à des valeurs de consigne dépendant du couple Cm et de la vitesse $\omega m$ du moteur, par l'intermédiaire de la pression de ligne PL, permet ainsi d'atteindre l'objectif recherché.

Du point de vue des conditions de fonctionnement des garnitures de friction, la situation est très sensiblement meilleure que dans le cas d'un lock-up intégré:

- en effet, pour un tel lock-up, même biface, il est difficile de dépasser 150 cm$^2$ de garniture, alors qu'il est courant d'atteindre ou dépasser 500 cm$^2$ dans un récepteur de transmission automatique dimensionné pour supporter l'énergie dissipée lors d'un changement de rapport. Il en résulte que la puissance dissipée par cm$^2$ de garniture, paramètre crucial pour l'endurance des garnitures, est très inférieure dans le cas d'une réalisation conforme à la présente invention;

- pour les raisons de dimensionnement exposées ci-dessus, la pression spécifique à laquelle travaillent les garnitures est également sensiblement plus faible, ce qui constitue aussi un élément favorable pour l'endurance des garnitures;

- enfin, à vitesse angulaire de glissement identique, la vitesse linéaire de glissement des garnitures est également significativement plus faible puisque sensiblement dans le rapport des diamètres d'un récepteur et d'un convertisseur, ce qui constitue un autre facteur favorable à la longévité des garnitures.

Le dispositif de contrôle de l'invention associe donc, à une transmission automatique à train (s) planétaire (s) dans lequel le dimensionnement des récepteurs hydrauliques a été prévu de manière à ce que, sur tous les rapports sur lesquels on souhaite bénéficier d'un effet de limiteur de couple, un seul des récepteurs en prise sur chaque rapport commence seul à glisser lorsque l'on abaisse de manière contrôlée la pression de ligne:

- une régulation de pression de ligne électro-hydraulique pilotée par un calculateur électronique recevant les informations appropriées de couple moteur Cm, vitesse moteur $\omega$m et vitesse turbine $\omega_t$,

- un système de lock-up intégré au convertisseur et commandé en tout ou rien par le même calculateur électronique,

- une boucle d'asservissement du glissement $\delta\omega = \omega m - \omega_t$ à une valeur de consigne $\delta\omega^c$ (Cm, $\omega$m), fonction des paramètres principaux Cm et $\omega$m, et éventuellement de paramètres secondaires comme le rapport engagé et la température d'huile, à titre d'exemple non limitatif.

L'examen du tableau de commutation de la Fig. 2 montre que l'embrayage $E_2$, 8, est commun aux rapports 2, 3 et 4 : en contrôlant le glissement de cet embrayage dans la mesure où il a été dimensionné de telle manière qu'il soit toujours le premier à glisser lorsque la pression de ligne générale d'alimentation des récepteurs est abaissée de façon contrôlée, on peut donc bénéficier, sur les rapports de 2°, 3° et 4°, de l'effet de limiteur de couple ainsi obtenu au bénéfice du filtrage des vibrations de torsion engendrées par les acyclismes moteur. Pour borner dans la durée les sollicitations auxquelles sont soumises les garnitures de $E_2$, 8, pendant les phases de glissement contrôlé, on limitera ces dernières aux conditions de fort couple, faible vitesse du moteur, les autres conditions moins difficiles à traiter étant prises en compte par l'amortisseur de torsion 7 intégré dans le convertisseur 1, comportant un lock-up traditionnel 6, 6' à commande par tout ou rien.

L'amortisseur 7 pourra d'ailleurs être supprimé si le dimensionnement de l'embrayage $E_2$, 8, permet de faire fonctionner dans tous les cas les garnitures de l'embrayage $E_2$, 8, dans des conditions suffisamment favorables, et/ou avec des moteurs à nombre élevé de cylindres (supérieur ou égal à six dans la plupart des cas).

La régulation de pression, décrite ici à titre d'exemple non limitatif et conforme aux principes exposés dans la publication EP-A-0 179 683 de la demanderesse, met en oeuvre une vanne principale de régulation de pression 9, équilibrée, d'un côté, par un premier ressort 10, et de l'autre côté par la pression de ligne régulée PL agissant en contre-réaction sur un poussoir 11 et par la pression de commande modulée Pm agissant sur la surface différentielle 12 entre la vanne 9 et le poussoir 11, dans le même sens que la pression régulée PL.

Par ailleurs, à partir de la pression $P_L$, une vanne de réduction de pression 13, délivrant une presssion d'alimentation $P_1$ est équilibrée d'un côté, par un second ressort 14 et de l'autre côté par la pression $P_1$ elle-même, ramenée en contre-réaction à travers un premier gicleur 26, pour assurer sa propre régulation à une valeur constante.

Cette pression $P_1$ sert à l'alimentation, au travers d'un second gicleur 27, de l'électrovanne modulante 15 qui détermine la valeur de la pression modulée Pm agissant vers la droite sur le différentiel de surface 12 existant entre la vanne de régulation 9 et le poussoir 10. Cette pression modulée Pm est en relation linéaire avec le signal de commande TON de l'électrovanne modulante 15. La source de puissance hydraulique peut être, de façon non limitative, une pompe 16 puisant dans une réserve d'huile 17.

L'asservissement du glissement de l'embrayage $E_2$ consiste à calculer en temps réel la valeur de TON qui permet d'obtenir le niveau de pression de ligne instantané $P_L$ autorisant le glissement souhaité de $E_2$.

Pour ce faire, à partir de la mesure et du calcul en continu :

- de la vitesse moteur ωm, fournie par le calculateur d'injection, ou par un capteur spécialisé non représenté dont le signal est traité par le calculateur de transmission automatique ;

- de la vitesse turbine $\omega_t$ le plus souvent fournie par un capteur spécifique 28 visant une cible 29 également spécifique;

- du couple moteur Cm;

on calcule :

- des lois de consigne de glissement, δωc, fonctions de la vitesse ωm et du couple moteur Cm, et le cas échéant du rapport engagé N, de la température d'huile θh ou d'autres variables pertinentes, dans l'unité de consigne de glissement 18, et

- le glissement effectif instantané $\delta\omega = \omega m - \omega_t$ dans l'unité de calcul du glissement 23.

La différence δωc - δω est envoyée sur un régulateur P.I.D. 19 - ce type de régulateur étant naturellement non limitatif - qui calcule une correction $\Delta P_L^C$ à la valeur de consigne $P_L^C$ élaborée pour le système d'asservissement de pression 21 par le calculateur de la transmission automatique.

Le système d'asservissement de pression 21 qui peut être, de manière non limitative, conforme à celui décrit dans la publication FR-A-2 616 931 de la demanderesse élabore le signal TON commandant l'électrovanne modulante 15. Les divers gains du régulateur 19 peuvent être ajustés, en fonction du rapport N établi, et également pendant les changements de rapports.

Si l'on désigne par $P_O$ la pression d'accostage de l'embrayage $E_2$, on calcule, dans l'unité de comparaison 22, la différence $P_L^C$ (gl) - Po, où $P_L^C$ (gl) = $P_L^C$ - $\Delta P_L^C$, puis le produit δω x [Pc (gl) - Po] dans l'unité de traitement 24. Chaque fois que δω passe d'une valeur nulle (pas de glissement) à une valeur non nulle (instant to), l'unité d'intégration 25 démarre l'intégration du produit,

$$Egl = \int_{t_0}^{t} \delta\omega[P^C (gl) - Po] \, dt$$

L'énergie Egl est proportionnelle à l'énergie dissipée dans l'embrayage $E_2$ à partir du début to de la phase de glissement. $S_i$ Egl dépasse un certain seuil fixé à l'avance, cela signifie que pendant la phase de glissement contrôlé considérée, l'énergie dissipé dans l'embrayage $E_2$ a atteint un niveau tel que l'endurance et la longévité des garnitures de friction risquent d'être mises en péril, et il convient donc de prendre des mesures conservatoires (réduction du glissement autorisé δωc ou rétrogradage au rapport inférieur).

**Revendications**

1. Dispositif de contrôle d'une transmission automatique à rapports étagés comportant un convertisseur de couple (1) muni de moyens de pontage (6, 6'), un train d'engrenages épicycloïdal (2), plusieurs récepteurs hydrauliques ($E_i$, $F_i$) assurant la commutation du train épicycloïdal (2), et un distributeur hydraulique (16, 17) délivrant une pression de ligne PL, qui permet d'alimenter sélectivement les récepteurs ($E_i$, $F_i$) sous le contrôle d'un calculateur électronique, selon des informations concernant la marche du véhicule équipé de la transmission, caractérisé en ce qu'au moins un élément de commutation (8) est dimensionné de façon à pouvoir glisser de manière contrôlée, notamment lorsque le convertisseur (1) est ponté, en réponse à une diminution momentanée de la pression de ligne PL, et en ce que ce glissement est asservi par l'intermédiaire de la pression de ligne PL, à des valeurs de consigne dépendant du couple Cm et de la vitesse du moteur ωm.

2. Dispositif de contrôle selon la revendication 1, caractérisé en ce que les moyens de pontage (6, 6'), intégrés au convertisseur (1), sont commandés en tout ou rien par le calculateur de la transmission.

3. Dispositif de commande selon les revendications 1 ou 2, caractérisé en ce que le convertisseur (1) est muni d'un amortisseur de torsion (7) intégré.

**4.** Dispositif de contrôle selon les revendications 1, 2 ou 3, caractérisé en ce qu'il comporte un système d'asservissement de pression (21) qui délivre en temps réel un signal de commande TON, à une électrovanne modulante (15) destinée à abaisser momentanément la pression de ligne PL pour autoriser le glissement de l'élément de commutation (8).

**5.** Dispositif de contrôle selon l'une quelconque des revendications précédentes, caractérisé en ce que la régulation de la pression de ligne PL est pilotée par le calculateur électronique de la transmission qui reçoit des informations relatives au couple moteur Cm, à la vitesse du moteur $\omega$m et à la vitesse turbine $\omega$t.

**6.** Dispositif de contrôle selon l'une quelconque des revendications précédentes, caractérisé en ce que la boucle d'asservissement de glissement permet de comparer la valeur instantanée du glissement $\delta\omega = \omega$m - $\omega$t, à une valeur de consigne de glissement $\delta\omega^c$ (Cm, $\omega$m) fonction des paramètres principaux Cm et $\omega$m, et éventuellement de paramètres secondaires, tels que le rapport engagé (N) ou la température de l'huile ($\theta$h).

**7.** Dispositif de contrôle selon la revendication 6, caractérisé en ce qu'il comporte un régulateur (19) permettant de calculer la diminution de pression $\Delta P_L^C$ devant être imposée à la pression de ligne de consigne $P_L^C$ déterminée par le calculateur de la transmission, de façon à établir la consigne de pression de ligne pendant le glissement $P_L^C$ (gl) = $P_L^C$ - $AP_L^C$.

**8.** Dispositif de contrôle selon la revendication 7, caractérisé en ce qu'il comporte une unité de comparaison (22) assurant le calcul de la différence entre la pression de consigne $P_L^C$ (gl) et la pression d'accostage Po de l'organe de commutation, cette différence étant transmise à une unité de traitement (24) qui effectue son produit par la valeur instantanée du glissement $\delta\omega$.

**9.** Dispositif de contrôle selon la revendication 8, caractérisé en ce qu'il comporte une unité d'intégration (25) susceptible de démarrer le calcul de l'énergie :

$$Egl = \int_{t_o}^{t} \delta\omega[P^C (gl) - Po]\, dt$$

proportionnelle à l'énergie dissipée dans l'organe de commutation (8) à partir du début to de la phase de glissement, chaque fois que $\delta\omega$ adopte une valeur non nulle.

**10.** Dispositif de contrôle selon la revendication 9, caractérisé en ce que le dépassement par Egl d'un seuil préétabli permet de déterminer que l'énergie dissipée dans l'organe de commutation (8) pendant une phase de glissement a atteint un niveau mettant en péril l'endurance et la longévité des garnitures de friction de celui-ci.

**11.** Dispositif de contrôle selon l'une quelconque des revendications 4 à 10 caractérisé en ce qu'il comporte une vanne principale de régulation de pression (9) équilibrée d'un côté par un premier ressort (10) et de l'autre par la pression régulée PL agissant en contre réaction sur un poussoir (11) et par la pression de commande modulée Pm contrôlée par l'électrovanne modulante (15), agissant dans le même sens que la pression de ligne PL, sur la surface différentielle (12) existant entre la vanne de régulation principale (9) et le poussoir (11).

**12.** Dispositif de contrôle selon la revendication 11, caractérisé en ce qu'il comporte une vanne de réduction de pression (13) délivrant une pression d'alimentation $P_1$, équilibrée d'un côté par un second ressort (14), et de l'autre côté par la pression $P_1$ elle-même ramenée en contre régulation au travers d'un premier gicleur (26), pour assurer sa propre régulation, en vue permettre par l'intermédiaire d'un second gicleur (27), l'alimentation de l'électrovanne modulante (15).

**13.** Dispositif de contrôle selon l'une quelconque des revendications précédentes, caractérisé en ce que les organes de commutation comportent au moins deux embrayages ($E_1$, $E_2$) et trois moyens d'immobilisation ($F_1$, $F_2$, $F_3$), et en ce que l'organe de commutation sollicité par le glissement est un embrayage $E_2$ serré sur au moins les trois rapports supérieurs de la transmission.

# EP 0 571 275 B1

**Patentansprüche**

1. Steuervorrichtung für ein automatisches Stufengetriebe, mit einem Drehmomentwandler (1), der mit einer Überbrückungsanordnung (6,6') versehen ist, mit einem Planetengetriebe (2), mit mehreren hydraulischen Aufnehmern ($E_i$, $F_i$) zur Schaltung des Planetengetriebes (2) und mit einem hydraulischen Verteiler (16, 17), der einen Leitungsdruck PL zur Verfügung stellt, mit dem wahlweise die Aufnehmer ($E_i$, $F_i$) gespeist werden können, unter Steuerung eines elektronischen Rechners entsprechend den die Fahrt des mit dem Getriebe ausgerüsteten Fahrzeugs betreffenden Informationen, **dadurch gekennzeichnet**, daß wenigstens ein Schaltelement (8) derart bemessen ist, daß es in gesteuerter Weise gleiten kann, insbesondere, wenn der Wandler (1) überbrückt ist, in Abhängigkeit von einer momentanen Verringerung des Leitungsdrucks PL, und daß dieses Gleiten durch den Leitungsdruck PL gesteuert wird auf Einstellwerte, die vom Moment Cm und der Motorgeschwindigkeit ωm abhängen.

2. Steuervorrichtung nach Anspruch 1, **dadurch gekennzeichnet,** daß die im Wandler integrierte Überbrückungsanordnung (6,6') vom Getrieberechner im Alles- oder Nichts-Verfahren gesteuert wird.

3. Steuervorrichtung nach Ansprüchen 1 oder 2, **dadurch gekennzeichnet,** daß der Wandler (1) mit einem integrierten Torsionsdämpfer (7) versehen ist.

4. Steuervorrichtung nach Ansprüchen 1, 2 oder 3, **dadurch gekennzeichnet**, daß sie ein Drucksteuersystem (21) aufweist, welches in Echtzeit ein Steuersignal TON einem modulierenden Elektroventil (15) zuführt, welches den Leitungsdruck momentan absenkt, um ein Gleiten des Schaltelementes (8) zu ermöglichen.

5. Steuervorrichtung nach einem der vorhergehenden Ansprüche, **dadurch gekennzeichnet,** daß die Regelung des Leitungsdrucks PL gesteuert wird vom elektronischen Getrieberechner, welcher die Informationen bezüglich des Motormomentes Cm der Motorgeschwindigkeit ωm und der Turbinengeschwindigkeit ωt erhält.

6. Steuervorrichtung nach einem der vorhergehenden Ansprüche, **dadurch gekennzeichnet**, daß die Steuerschleife des Gleitvorgangs es ermöglicht, den momentanen Gleitwert $\delta\omega = \omega m - \omega t$ mit einem Gleiteinstellwert $\delta\omega^c$ (Cm, ωm) als Funktion der Hauptparameter Cm und ωm zu vergleichen und gegebenenfalls mit Sekundärparametern, wie z.B. dem eingelegten Gang N oder die Öltemperatur θh.

7. Steuervorrichhtung nach Anspruch 6, **dadurch gekennzeichnet**, daß sie ein Steuergerät (19) aufweist, welches es ermöglicht, die Druckabnahme $\Delta P_L{}^c$ zu berechnen und diese beim Wert des Leitungsdrucks $P_L{}^c$, der vom Getrieberechner ermittelt wurde, zu berücksichtigen hinsichtlich der Erstellung eines Leitungsdruckwertes während des Gleitvorgangs von $P_L{}^c$ (gl) = $P_L{}^c$ - $\Delta P_L{}^c$.

8. Steuervorrichtung nach Anspruch 7, **dadurch gekennzeichnet**, daß sie eine Vergleichereinheit (22) aufweist, welche die Berechnung der Differenz zwischen dem Einstelldruck $P^c$ (gl) und dem Kupplungsdruck Po des Schaltteils ausführt, wobei diese Differenz einer Verarbeitungseinheit (24) zugeführt wird, welche ihr Produkt mit dem momentanen Gleitwert $\delta\omega$ bildet.

9. Steuervorrichtung nach Anspruch 8, **dadurch gekennzeichnet**, daß sie eine Integriereinheit (25) aufweist, die in der Lage ist, die folgende Energieberechnung durchzuführen:

$$Egl \;=\; \int_{to}^{t} \delta\omega [P^c \; (gl) \; - \; Po] \; dt$$

proportional zu der im Schaltteil 8 in Wärme umgewandelten Energie, ausgehend vom Beginn der Gleitphase jedesmal, wenn $\delta\omega$ einen Wert ungleich Null annimmt.

10. Steuervorrichtung nach Anspruch 9, **dadurch gekennzeichnet**, daß das Überschreiten von Egl eines vorgegebenen Schwellwertes es ermöglicht, zu bestimmen, daß die im Schaltteil (8) während einer Gleitphase in Wärme umgewandelte Energie ein Niveau erreicht hat, welches die Haltbarkeit und die Lebensdauer ihrer Reibbeläge beeinträchtigt.

11. Steuervorrichtung nach einem der Ansprüche 4 bis 10, **dadurch gekennzeichnet**, daß sie ein Hauptventil zur

7

Drucksteuerung (9) aufweist, das sich im Gleichgewicht befindet, einerseits durch eine erste Feder (10) und andererseits durch den gesteuerten Druck PL, der wiederum auf einen Schieber (11) wirkt und durch den modulierten Steuerdruck Pm, der durch das modulierende Elektroventil (15) gesteuert wird, und der in gleicher Richtung wie der Leitungsdruck PL auf die Differentialfläche (12) wirkt, welche zwischen dem Hauptventil der Steuerung (9) und dem Schieber (10) vorhanden ist.

12. Steuervorrichtung nach Anspruch 11, **dadurch gekennzeichnet**, daß sie ein Druckreduzierventil (13) aufweist, welches einen Versorgungsdruck $P_1$ liefert, und das sich im Gleichgewicht befindet, einerseits durch eine zweite Feder (14) und andererseits durch den Druck $P_1$, der wiederum durch eine erste Engstelle (26) hindurch eine Gegenwirkung ausübt im Hinblick auf seine eigene Steuerung, um dadurch die Speisung des modulierenden Elektroventils (15) durch eine zweite Engstelle (27) hindurch zu ermöglichen.

13. Steuervorrichtung nach einem der vorhergehenden Ansprüche, **dadurch gekennzeichnet**, daß die Schaltteile wenigstens zwei Kupplungen ($E_1$, $E_2$) und wenigstens drei Feststellanordnungen ($F_1$, $F_2$, $F_3$) aufweisen, und daß das durch den Gleitvorgang beaufschlagte Schaltteil eine Kupplung $E_2$ ist, die mit wenigstens den drei höchsten Gängen des Getriebes verbunden ist.

## Claims

1. Automatic transmission control device with stepped gears, comprising a torque converter (1) provided with bridging means (6, 6'), a planetary gear train (2), several hydraulic receivers ($E_i$, $F_i$) assuring the switching of the planetary gear train (2), and a hydraulic distributor (16, 17) delivering a line pressure PL which allows selective supply of the receivers ($E_i$, $F_i$) under the control of a computer according to data relating to the operation of the vehicle equipped with the transmission, characterised in that at least one of said switching elements (8) is dimensioned in a manner to be able to slip in a controlled manner, particularly when said converter (1) is bridged in response to a momentary reduction in the line pressure PL, and in that said slipping is servo-controlled by the line pressure PL at set values depending upon the torque Cm and the engine speed ωm.

2. Control device according to claim 1, characterised in that the bridging means (6, 6') integrated into the converter (1) are controlled in an on and off manner by the transmission computer.

3. Control device according to claims 1 or 2, characterised in that the converter (1) is provided with an integrated torsion damper (7).

4. Control device according to claims 1, 2 or 3, characterised in that it comprises a pressure servo-control system (21) which delivers, in real time, a control signal TON to a modulating solenoid valve (15) intended to momentarily lower the line pressure PL to allow the slipping of the switching element (8).

5. Control device according to any one of the preceding claims, characterised in that the regulation of the line pressure PL is controlled by the transmission computer which receives data relative to the engine torque Cm, to the engine speed ωm and to the turbine speed ωt.

6. Control device according to any one of the preceding claims, characterised in that the slipping servo-control loop allows comparison of the instantaneous value of the slipping $\delta\omega = \omega m - \omega t$ to a slipping set value $\delta\omega^c$ (Cm, ωm), which is a function of the main parameters Cm and ωm, and optionally of secondary parameters such as the gear engaged (N) or the oil temperature (θh).

7. Control device according to claim 6, characterised in that it comprises a regulator (19) for calculating a reduction in pressure $\Delta P_L^c$ which must be imposed at a set line pressure $P_L^c$ determined by the transmission computer, to establish a line pressure set value during slipping $P_L^c(gl) = P_L^c - \Delta P_L^c$.

8. Control device according to claim 7, characterised in that it comprises a comparison unit (22) assuring the calculation of the difference between the set pressure $P^c$ (gl) and the closing pressure Po of the switching member, said difference being transmitted to a processing unit (24) which calculates its product by the instantaneous value of the slipping δω.

9. Control device according to claim 8, characterised in that it comprises an integration unit (25) able to initiate the calculation of the energy:

$$Egl = \int_{to}^{t} \delta\boldsymbol{\omega}[P^{c}\,(gl) - Po]dt$$

proportional to the energy dissipated in the switching member (8) starting from the beginning of the slipping phase each time that $\delta\omega$ adopts a non-zero value.

10. Control device according to claim 9, characterised in that the exceeding of a pre-determined threshold by Egl determines that the energy dissipated in the switching element during a slipping phase has reached a level jeopardising the endurance and the operating life of the friction linings thereof.

11. Control device according to any one of claims 4 to 10, characterised in that it comprises a main pressure-regulating valve (9) balanced on one side by a first spring (10) and on the other side by the regulated line pressure PL acting in the opposite direction upon a push rod (11) and by the modulated control pressure Pm controlled by the modulating solenoid valve (15) acting in the same direction as the line pressure PL on the differential surface (12) existing between the main regulating valve (9) and the push rod (11).

12. Control device according to claim 11, characterised in that it comprises a pressure-reducing valve (13) delivering a supply pressure $P_1$, balanced on one side by a second spring (14) and on the other side by the pressure $P_1$ which is itself returned in the opposite direction through a first jet (26) in order to assure its own regulation, in order to allow the supply of the modulating solenoid valve (15) by means of a second jet (27).

13. Control device according to any one of the preceding claims, characterised in that the switching elements comprise at least two clutches ($E_1$, $E_2$) and three stopping means ($F_1$, $F_2$, $F_3$), and in that the switching element stressed by the slipping is a clutch $E_2$ locked on at least the three top gears of the transmission.

## FIG·1

(8)

| | $E_1$ | $E_2$ | $F_1$ | $F_2$ | $F_3$ |
|---|---|---|---|---|---|
| R | X | | | X | |
| N | X | | | | |
| 1 | X | | | | X |
| 2 | | X | | | X |
| 3 | X | X | | | |
| 4 | | X | X | | |

## FIG·2

10

EP 0 571 275 B1

FIG · 3

11

FIG·4